# EUROPÄISCHE PATENTSCHRIFT

(11) **EP 0 758 490 B1**
(45) Veröffentlichungstag und Bekanntmachung des Hinweises auf die Patenterteilung: **16.09.1998**
(21) Anmeldenummer: 95918568.7
(22) Anmeldetag: 20.04.1995
(51) Int. Cl.: H01M 2/18

(54) **SEPARATOR MIT LÄNGS- UND QUERRIPPEN ZUR VERWENDUNG IN AKKUMULATOREN**
SEPARATORS HAVING LONGITUDINAL AND TRANSVERSE RIBS FOR USE IN STORAGE BATTERIES
SEPARATEUR A NERVURES LONGITUDINALES ET TRANSVERSALES S'UTILISANT DANS DES ACCUMULATEURS

(30) Priorität: 25.04.1994 DE 4414723
(43) Veröffentlichungstag der Anmeldung: 19.02.1997
(73) Patentinhaber: DARAMIC, INC., North Charleston, SC 29406 (US)
(72) Erfinder: BÖHNSTEDT, Werner, D-24558 Henstedt-Ulzburg (DE)
(74) Vertreter: UEXKÜLL & STOLBERG
(86) Internationale Anmeldenummer: EP9501464
(87) Internationale Veröffentlichungsnummer: WO9529508

(56) Entgegenhaltungen:
- EP-A- 0 541 124
- CH-A- 298 636

## Beschreibung

Die Erfindung betrifft Scheider für Akkumulatoren, vorzugsweise in Form von nicht-konfektionierter Rollenware. Die Separatoren weisen mindestens einseitig ein Muster aus Längs- und Querrippen auf, das die Steifigkeit der Separatoren sowohl in Längs- als auch in Querrichtung erhöht und eine Verformung des Separatorblattes durch Wickelvorgänge verhindert.

Bei den heute in Akkumulatoren eingesetzten Separatoren handelt es sich um mikroporöse Folien, die Kurzschlüsse zwischen den Platten und das Herausfallen von Plattenmaterial verhindern, aufgrund ihrer Porenstruktur jedoch einen ionischen Stromfluß im Elektrolyt zulassen. Üblicherweise sind solche Separatoren zumindest einseitig mit Längsrippen versehen, die den direkten Kontakt des Separatorblattes mit der positiven Elektrodenplatte vermeiden sollen. Gleichzeitig verleihen diese Rippen dem Separator eine gewisse Steifigkeit in Längsrichtung. Die Separatoren bestehen im allgemeinen aus einem thermoplastischen Kunststoff und werden zu Taschen geformt, in welche die positive oder negative Elektrodenplatte eingesetzt wird. Üblicherweise ist die Höhe der Rippen größer als die Dicke des Scheiderblattes, was für an den Rippen angreifende Kräfte ein relativ ungünstiges Drehmoment zur Folge hat, welches im Zusammenspiel mit der Plastizität der verwendeten Kunststoffe häufig zu Verformungen des Separators führt. Solche Verformungen treten besonders beim Aufrollen der fertigen Separatorbahnen auf. Als Folge davon sind die Separatoren nicht mehr eben, was bei der anschließenden Konfektionierung und Weiterverarbeitung zu Taschen erhebliche Probleme bereitet. Nachteilig an den bekannten Separatoren ist zudem ihre geringe Steifigkeit in Querrichtung.

In der DE-PS 28 47 463 werden Starr-Scheider für elektrische Akkumulatoren beschrieben, bei denen ein mikroporöses Grundmaterial mit einer Netzstruktur aus Streckkunststoff thermisch verbunden wird. Die Stege des Streckkunststoffes weisen unterschiedliche Dicken auf und erleichtern so das Entweichen von Elektrolysegasen. Diese Scheider besitzen nach allen Flächenrichtungen hin eine erhöhte Biegefestigkeit. Nachteilig an diesen Separatoren ist, daß die Netzstruktur und das Grundmaterial unabhängig voneinander hergestellt und dann in einem zusätzlichen Verfahrensschritt miteinander verbunden werden müssen. Zudem erlaubt die Netzstruktur der Streckkunststoff-Auflage den Elektrolysegasen keinen geradlinigen Aufstieg, sondern zwingt den Gasblasen einen zickzackförmigen Verlauf auf. Bei den in der DE-PS 28 47 463 offenbarten Batteriescheidern handelt es sich um Starrscheider, die in Blattform in das Akkumulatorgehäuse eingesetzt werden. Die Handhabung solcher Starrseparatoren ist relativ umständlich, so daß das Interesse daran rückläufig ist. Auch erlaubt der Aufbau der in der DE-PS 28 47 463 offenbarten Separatoren nicht deren Weiterverarbeitung zu Taschen, wie sie gegenwärtig üblich ist.

Aufgabe der vorliegenden Erfindung ist es, Separatoren für Akkumulatoren bereitzustellen, die sowohl in Längs- als auch in Querrichtung eine erhöhte Steifigkeit aufweisen, und welche mit Rippen versehen sind, die sich integral, d.h. gleichzeitig mit dem porösen Separatorblatt herstellen lassen und die den Ladegasen ein geradliniges und schnelles Entweichen ermöglichen. Die Separatoren sollen vorzugsweise in Form von einfach zu handhabender Rollenware vorliegen und sich leicht zu Taschen weiterverarbeiten lassen.

Gegenstand der Erfindung ist ein Separator für Akkumulatoren, welcher zusätzlich zu den in Fertigungsrichtung verlaufenden Längsrippen dazu quer verlaufende Rippen aufweist. Die Querrippen weisen im Vergleich zu den Längsrippen eine geringere Höhe auf. Die Anordnung der Separatoren im Akkumulator erfolgt derart, daß die Längsrippen vertikal und die Querrippen horizontal verlaufen, so daß durch die verringerte Höhe der Querrippen ein Kanal geschaffen wird, der ein geradliniges und leichtes Entweichen der Ladegase erlaubt. Die Querrippen lassen sich gleichzeitig mit den Längsrippen erzeugen und erfordern keinen zusätzlichen Arbeitsschritt.

Zur Herstellung der erfindungsgemäßen Separatoren eignen sich prinzipiell alle säurebeständigen thermoplastischen Kunststoffe. Bevorzugte Materialien sind Polyvinylchlorid, Polyethylen und Polypropylen, wobei hochmolekulares Polyethylen besonders bevorzugt ist. Die Herstellung erfolgt bevorzugt unter Zusatz anorganischer Füllstoffe, wie amorpher Kieselsäure, wobei Zusammensetzung und Herstellung derartiger Separatoren aus dem Stand der Technik bekannt sind (z.B. DE-PS 1 267 423, DE-PS 1 298 712, DE-AS 1 496 123 und DE-PS 39 28 468).

Die Dicke des Separatorblattes beträgt etwa 0,10 bis 0,50 mm, die Höhe der Längsrippen liegt zwischen 0,3 und 2,0 mm, so daß die Gesamtdicke des Separators bis etwa 2,50 mm beträgt. Separatoren mit einer Gesamtdicke von 1,0 bis 2,0 mm sind jedoch bevorzugt. Die Querrippen weisen eine im Vergleich zu den Längsrippen reduzierte Höhe auf. Sie beträgt etwa 1/10 bis zu 1/2, vorzugsweise etwa 1/3, der Höhe der Längsrippen und liegt bei etwa 0,1 bis 0,7 mm. Die Längsrippen weisen vorzugsweise eine Breite von ca. 0,7 mm und die Querrippen von ca. 0,35 mm auf.

Der Abstand zwischen zwei benachbarten Längs- bzw. Querrippen hängt von der gewünschten Steifigkeit des Separators ab. Für die Anwendung in Starterbatterien haben sich bei einer Blattdicke von 0,25 mm, einer Längsrippenhöhe von 1,0 mm und einer Querrippenhöhe von 0,4 mm Abstände von 8 mm bis 15 mm für die Längs- und von 3 mm bis 8 mm für die Querrippen bewährt.

In einer bevorzugten Ausführungsform bilden Längs- und Querrippen Winkel von 90° zueinander. Es sind jedoch auch Ausführungen mit von 90° verschiedenen Winkeln denkbar. Hierbei können sämtliche Querrippen parallel zueinander verlaufen, so daß alle Querrippen die Längsrippen unter gleichem Winkel schneiden, es ist jedoch auch möglich, daß die Querrippen mehrere Gruppen paralleler Rippen bilden, die untereinander in Winkeln von etwa 90° bis ≤ 180° zueinander stehen, wie man es beispielsweise von dem sogenannten Fischgrätenmuster her kennt.

Separatoren mit zu den Längsrippen rechtwinkeligen Querrippen mit einer Höhe von etwa 1/3 der Höhe der Längsrippen weisen im Vergleich zu Separatoren ohne Querrippen eine etwa dreifach höhere Quersteifigkeit auf, wobei sich dieser Wert durch Variation der Querrippendimensionen und -abstände weiter vergrößern oder verkleinern läßt. Die Längssteifigkeit der erfindungsgemäßen Separatoren erreicht bei 100 mm Breite üblicherweise Werte von 5 mJ, die Quersteifigkeit von 2,5 mJ.

Die Längs- und Querrippen können sowohl einen runden als auch einen eckigen Querschnitt aufweisen, wobei gleichschenkelig trapezförmige Querschnitte bevorzugt sind.

Die Herstellung der erfindungsgemäßen Separatoren kann auf dieselbe Weise erfolgen wie bei konventionellen Polyethylenseparatoren. Dabei wird die füllstoffhaltige Kunststoffmasse durch eine Schlitzdüse extrudiert und anschließend durch zwei Kalanderwalzen geführt, durch welche sowohl die Längs- als auch die Querrippen erzeugt und das Scheiderblatt auf die gewünschte Dicke reduziert wird.

Versuche haben gezeigt, daß die erfindungsgemäßen Separatoren eine bessere Maschinengängigkeit als solche ohne Querrippen aufweisen. Durch die erhöhte Quersteifigkeit ist eine wesentlich bessere Führung der Separatorbahnen möglich. Auch die Verarbeitbarkeit bei der Eintaschung der Elektrodenplatten wird durch die erhöhte Quersteifigkeit erheblich verbessert. Zudem wird die Produktion von Separatoren mit deutlich verringerter Blattdicke und damit geringerem elektrischen Widerstand möglich, was besonders im Hinblick auf Bemühungen, bei gleichbleibendem Batterievolumen die Leistung immer weiter zu steigern, von Bedeutung ist. Die Verarbeitung der erfindungsgemäßen Separatoren zu Taschen ist auf herkömmlichen Maschinen problemlos möglich. Die zusätzlichen Querrippen stellen weder beim Schweißen der Taschen durch Anwendung von Hitze oder Ultraschall, noch bei mechanischen Verfahren zur Fertigung von Taschen ein Hindernis dar.

Die erfindungsgemäßen Separatoren liegen vorzugsweise in Form nicht-konfektionierter Rollenware vor. Durch Versuche wurde gezeigt, daß es weder beim Wickelvorgang noch bei der Lagerung der Rollen zu Verformungen der Separatoren kommt. Es wurden Rollen mit einem Durchmesser von ca. 0,8 m untersucht. Die Rollen wiesen etwa 200 übereinanderliegende Separatorlagen auf.

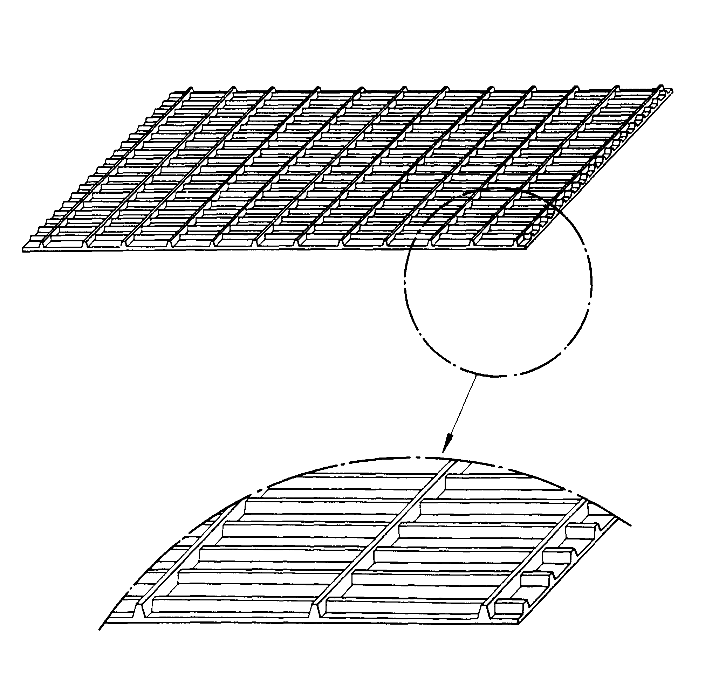

Figur 1 zeigt eine perspektivische Darstellung eines erfindungsgemäßen Separators mit senkrecht zu den Längsrippen verlaufenden Querrippen.

## Patentansprüche

1. Scheider für Akkumulatoren aus thermoplastischem Kunststoff, welcher Längs- und Querrippen aufweist, wobei die Höhe der Längsrippen größer als die der Querrippen ist und die Längs-und Querrippen integral aus dem Kunststoff geformte, massive Rippen darstellen, **dadurch gekennzeichnet,** daß die Querrippen sich über die gesamte Breite des Scheiders erstrecken.

2. Scheider nach Anspruch 1, **dadurch gekennzeichnet**, daß seine Blattstärke etwa 0,10 bis 0,50 mm beträgt.

3. Scheider nach Anspruch 1 oder 2, **dadurch gekennzeichnet**, daß die Höhe der Längsrippen 0,3 bis 2,0 mm und die Höhe der Querrippen 0,1 bis 0,7 mm beträgt.

4. Scheider nach einem der Ansprüche 1 bis 3, **dadurch gekennzeichnet,** daß die Längssteifigkeit bei 100 mm Breite ca. 5 mJ und die Quersteifigkeit ca. 2,5 mJ beträgt.

5. Scheider nach einem der Ansprüche 1 bis 4, **dadurch gekennzeichnet**, daß die Gesamtdicke des Scheiders weniger als 2,5 mm beträgt.

6. Scheider nach einem der Ansprüche 1 bis 5, **dadurch gekennzeichnet,** daß er aus Polyethylen, Polypropylen, Polyvinylchlorid oder deren Mischungen besteht.

7. Scheider nach einem der Ansprüche 1 bis 5, **dadurch gekennzeichnet**, daß er aus mit Kieselsäure gefülltem Polyethylen hergestellt ist.

8. Fortlaufende Rollenware mit den Merkmalen der Ansprüche 1 bis 7 zur Herstellung von Batteriescheidern.

## Claims

1. Separator for rechargeable batteries made of a thermoplastic, which has longitudinal and transverse ribs, the height of the longitudinal ribs being greater than that of the transverse ribs, and the longitudinal and transverse ribs representing solid ribs which are integrally formed from the plastic, characterized in that the transverse ribs extend over the entire width of the separator.

2. Separator according to Claim 1, characterized in that its plate thickness is about 0.10 to 0.50 mm.

3. Separator according to Claim 1 or 2, characterized in that the height of the longitudinal ribs is 0.3 to 2.0 mm, and the height of the transverse ribs is 0.1 to 0.7 mm.

4. Separator according to one of Claims 1 to 3, characterized in that the longitudinal stiffness for a width of 100 mm is about 5 mJ, and the transverse stiffness is about 2.5 mJ.

5. Separator according to one of Claims 1 to 4, characterized in that the overall thickness of the separator is less than 2.5 mm.

6. Separator according to one of Claims 1 to 5, characterized in that said separator is composed of polyethylene, polypropylene, polyvinylchloride or mixtures thereof.

7. Separator according to one of Claims 1 to 5, characterized in that said separator is produced from polyethylene filled with silicic acid.

8. Continuous rolled material having the features of Claims 1 to 7 for producing battery separators.

## Revendications

1. Séparateur pour accumulateurs en matière thermoplastique, qui comporte des nervures longitudinales et transversales, dans lequel la hauteur des nervures longitudinales est supérieure à celle des nervures transversales et les nervures longitudinales et les nervures transversales sont des nervures massives, formées d'un seul tenant en matière plastique, caractérisé en ce que les nervures transversales s'étendent sur toute la largeur du séparateur.

2. Séparateur selon la revendication 1, caractérisé en ce que son épaisseur de feuille est comprise entre 0,10 et 0,50 mm.

3. Séparateur selon la revendication 1 ou 2, caractérisé en ce que la hauteur des nervures longitudinales est comprise entre 0,3 et 2,0 mm et la hauteur des nervures transversales est comprise entre 0,1 et 0,7 mm.

4. Séparateur selon l'une des revendications 1 à 3, caractérisé en ce que la rigidité longitudinale est égale à environ 5 mJ pour une largeur de 100 mm et que la rigidité transversale est égale à environ 2,5 mJ.

5. Séparateur selon l'une des revendications 1 à 4, caractérisé en ce que l'épaisseur totale du séparateur est inférieure à 2,5 mm.

6. Séparateur selon l'une des revendications 1 à 5, caractérisé en ce qu'il est formé de polyéthylène, de polypropylène, de chlorure de polyvinyle ou de mélanges de ces matériaux.

7. Séparateur selon l'une des revendications 1 à 5, caractérisé en ce qu'il est fabriqué en polyéthylène rempli d'acide silicique.

8. Marchandise continue en rouleau présentant les caractéristiques des revendications 1 à 7, pour fabriquer des séparateurs de batteries.
